# FASCICULE DE BREVET EUROPEEN

(11) **EP 2 823 495 B1**
(45) Date de publication et mention de la délivrance du brevet: **28.11.2018**
(21) Numéro de dépôt: 13708440.6
(22) Date de dépôt: 11.03.2013
(51) Int. Cl.: H01G 4/38, H01G 2/02, H01G 9/26, H01G 11/10, H01G 11/78, H01M 6/44

(54) **DISPOSITIF D'ISOLATION POUR ISOLER ÉLECTRIQUEMENT LES UNS DES AUTRES UNE PLURALITÉ D'ENSEMBLES DE STOCKAGE D'ÉNERGIE**
ISOLIERUNGSVORRICHTUNG ZUR ELEKTRISCHEN ISOLATION MEHRERER STROMSPEICHERANORDNUNGEN VONEINANDER
ISOLATING DEVICE FOR ELECTRICALLY ISOLATING A PLURALITY OF POWER-STORAGE ASSEMBLIES FROM ONE ANOTHER

(30) Priorité: 09.03.2012 FR 1252158
(43) Date de publication de la demande: 14.01.2015
(73) Titulaire: Blue Solutions, 29500 Ergué Gabéric (FR)
(72) Inventeur: JUVENTIN, Anne-Claire, F-29000 Quimper (FR); LE GALL, Laurent, F-29500 Ergue Gaberic (FR)
(74) Mandataire: Regimbeau
(86) Numéro de dépôt international: PCT/EP2013/054831
(87) Numéro de publication internationale: WO 2013/132093

(56) Documents cités:
- EP-A1- 1 069 631
- JP-A- 1 253 219
- US-A- 4 584 630

## Description

La présente demande concerne le domaine des ensembles de stockage d'énergie, notamment des modules comprenant une pluralité d'ensembles de stockage d'énergie disposés côté à côte et reliés électriquement en série. Plus particulièrement, la demande s'attache à un dispositif d'isolation qui permet d'isoler les ensembles de stockage les uns des autres au sein d'un tel module.

On rappelle que de tels ensembles de stockage d'énergie comprennent généralement une enveloppe composée d'un boîtier fermé à au moins une de ses extrémités par un couvercle et dans laquelle est placée une structure comprenant au moins une électrode positive, et une électrode négative, chacune reliées à un collecteur, et une électrolyte permettant le transfert des ions entre les électrodes positive et négative. Ces ensembles peuvent notamment constituer des condensateurs, des batteries ou des supercapacités.

On connaît déjà dans l'état de la technique un module de stockage d'énergie comprenant une pluralité d'ensembles de stockage d'énergie. Dans ce type de module, les ensembles sont généralement isolés électriquement les uns des autres de deux manières :
- soit en les maintenant à distance les uns des autres à l'aide d'un dispositif de maintien des ensembles, réalisé en un matériau isolant électriquement, qui permet de déterminer la position de chacun des ensembles. Un tel dispositif peut notamment être constitué par une structure posée au fond du module réalisée en un matériau élastomère, notamment en EPDM, et comprenant des logements séparés par des plots prévus pour caler les ensembles de stockage,
- soit en protégeant les ensembles en entourant entièrement chaque ensemble par une gaine en matière plastique isolante électriquement. Cette gaine peut être thermorétractable ou maintenue en place sur l'ensemble à l'aide d'un joint monté autour de l'ensemble et de la gaine.

Ces techniques ne sont toutefois pas optimales.

La technique de la gaine thermorétractable n'est en particulier pas facilement applicable car le retrait de la gaine est assez difficile à contrôler et nécessite souvent la mise en oeuvre d'une étape de finition pour dégager le couvercle de l'ensemble qui permet la connexion électrique de l'ensemble à un ensemble adjacent. En outre, l'étape de chauffage de l'ensemble permettant le retrait de la gaine est susceptible d'endommager l'électrolyte de l'ensemble. Dans le cas de la gaine maintenue par un joint torique, la gaine a tendance à glisser et l'isolation n'est donc pas optimale. De plus, dans les deux cas, il résulte de l'utilisation de cette technique que le procédé d'assemblage du module est assez long, puisqu'il faut effectuer une étape spécifique d'isolation sur chaque ensemble de stockage.

La technique de maintien à distance telle que présentée ci-dessus permet un assemblage du module bien plus simple mais ne permet pas d'obtenir un encombrement minimal du module, puisque les ensembles ne sont pas au contact les uns des autres. En outre, si l'on dimensionne les plots de sorte que le volume du module reste acceptable, on ne doit accepter que des ensembles dont les dimensions sont très proches des dimensions théoriques. Cela pose des problèmes notamment pour le centrage du couvercle sur le boîtier. Cette technique est donc susceptible de générer un taux de rebut important des ensembles et/ou une perte non négligeable de volume utile dans le module. En outre, la plaque de maintien peut être relativement coûteuse à fabriquer.

On cherche donc à remédier à ces inconvénients.

On connaît également d'après le document EP 1 069 631, un module de batterie comprenant deux supports de maintien d'ensembles de stockage d'énergie disposés côte à côte, chaque support électriquement isolant s'étendant dans un plan principal et étant muni de languettes faisant saillie depuis ce plan principal.

On connaît enfin d'après le document JP 1-253219, un dispositif de positionnement de condensateurs, qui comprend une feuille s'étendant dans un plan principal, cette feuille étant munie de plusieurs languettes d'un seul tenant. Ces languettes font saillie depuis le plan principal et sont positionnées entre deux condensateurs adjacents.

Aucun des deux documents précités ne décrit toutefois le fait d'avoir des languettes mobiles en rotation par rapport au reste du support ou de la feuille, autour d'un axe de pliage.

A cet effet, l'invention a pour objet un dispositif d'isolation pour isoler électriquement les uns des autres une pluralité d'ensembles de stockage d'énergie disposés côte à côte dans un module de stockage d'énergie, le dispositif comprenant une feuille réalisée en un matériau flexible, isolant électriquement et s'étendant selon un plan principal, le dispositif comprenant également au moins une languette d'un seul tenant avec la feuille pour isoler électriquement deux ensembles de stockage adjacents, qui ne sont pas reliés entre eux par une barrette de connexion électrique, (notamment deux bornes appartenant respectivement à deux ensembles de stockage adjacents), ladite languette étant réalisée dans un matériau isolant et étant destinée à s'étendre en saillie du plan principal de sorte à être positionnée entre deux ensembles de stockage adjacents.

Conformément à l'invention, la ou au moins l'une des languettes est mobile en rotation relativement au reste de la feuille selon un axe de pliage, de sorte qu'elle présente une configuration de fabrication dans laquelle elle s'étend dans le plan principal et une configuration pliée dans laquelle elle est placée dans un plan sensiblement perpendiculaire au plan principal.

Dans certains modes de réalisation, la feuille réalisée en matériau isolant peut permettre d'isoler électriquement les ensembles de stockage du module.

On notera que, lorsque l'on indique que le dispositif d'isolation est destiné à isoler électriquement les uns des autres une pluralité d'ensembles de stockage d'énergie, cela signifie qu'il est susceptible d'isoler au moins une borne de l'ensemble de stockage d'une borne d'un ensemble de stockage adjacent, les deux bornes n'étant pas au même potentiel, et ce, même si les bornes opposées desdits ensembles de stockage se trouvent au même potentiel et sont donc reliées électriquement. Chaque ensemble de stockage comprend en effet deux bornes, chacune des bornes présentant un potentiel différent, les deux bornes de chacun des ensembles étant isolées électriquement l'une de l'autre.

Le plan principal de la feuille est ainsi posé sur les ensembles de stockage, à au moins une extrémité de ceux-ci et la languette faisant saillie du plan principal s'étend entre les deux ensembles au niveau de la zone de contact entre ces deux éléments, pour isoler électriquement ces ensembles l'un de l'autre.

La feuille d'isolation peut être très fine et peut ne s'étendre entre les ensembles qu'au niveau de leur zone de contact. En effet, la différence de potentiel entre deux ensembles adjacents est très faible, de l'ordre de quelques volts et l'interposition d'une feuille en matériau isolant suffit à éviter un court-circuit entre les éléments dans les zones de contact entre ceux-ci. De plus, la distance, même minime, entre les ensembles suffit à les isoler dans leurs zones dépourvues de contact.

Le dispositif d'isolation selon l'invention permet donc une isolation efficace des éléments entre eux. En outre, il est très facile à installer lors de l'assemblage du module. En effet, une seule pièce peut permettre d'assurer l'isolation de nombreux éléments entre eux, ce qui limite le nombre d'opérations nécessaires pour atteindre ce but. En outre, la mise en place du dispositif reste relativement simple, puisqu'il suffit de poser la feuille sur les éléments et d'ajuster la position des languettes relativement aux ensembles, ce qui ne nécessite pas un temps d'assemblage important.

L'invention permet donc de diminuer de façon considérable les coûts consacrés à cette fonction au vu de la simplification de l'assemblage et du nombre limité de pièces à utiliser pour réaliser cette fonction.

En outre, comme la feuille peut être dimensionnée assez fine, on peut optimiser l'encombrement du module puisque les éléments sont en appui les uns sur les autres (à l'épaisseur des languettes près). Du fait de sa nature de feuille, qui lui donne une certaine flexibilité, le dispositif permet aussi de mieux s'adapter aux défauts géométriques des ensembles, notamment concernant le centrage du couvercle sur le boîtier. On peut alors diminuer les exigences que l'on impose aux ensembles finis et le taux de rebut de ceux-ci. Cela peut également conduire à une simplification du procédé de fabrication de l'ensemble lui-même au vu de cette diminution d'exigence.

On s'est également rendu compte que le dispositif avait une bonne tenue en vieillissement et résistait bien aux vibrations mécaniques, à la compression ou à la montée en température du module et remplit donc toutes les conditions du cahier des charges d'un module.

On va maintenant décrire des modes de réalisation particuliers de l'invention à l'aide des dessins listés ci-dessous, dans lesquels :
- la figure 1 est une vue en perspective d'un dispositif d'isolation selon un mode de réalisation de l'invention, avant installation dans un module de stockage d'énergie,
- les figures 2A et 2B sont des vues en perspective d'un détail du dispositif dans les configurations respectives de fabrication et d'installation de celui-ci ;
- la figure 3 est une variante de réalisation du dispositif d'isolation de la figure 1,
- la figure 4 représente une vue éclatée d'un coeur de module d'ensembles de stockage d'énergie selon un mode de réalisation de l'invention,
- la figure 5A est une vue en coupe du module complet comprenant le coeur de module de la figure 4
- la figure 5B est une vue d'un détail de la figure 5A,

Comme déjà indiqué ci-dessus et représenté sur les figures, l'invention concerne un dispositif d'isolation (10) pour isoler électriquement les uns des autres une pluralité d'ensembles (102) de stockage d'énergie disposés côte à côte dans un module (100) de stockage d'énergie, le dispositif comprenant une feuille (11) réalisée en un matériau isolant électriquement et s'étendant selon un plan principal (P), le dispositif comprenant également au moins une languette (12A-12E; 14A - 14E, 16A- 16E, 18A-18D, 20A - 20D, 22A - 22D) d'un seul tenant avec la feuille (11) et susceptible de faire saillie du plan principal (P) de la feuille en s'étendant essentiellement perpendiculairement audit plan principal de la feuille.

Ladite feuille (11) est de préférence réalisée en un matériau flexible.

Dans un mode de réalisation de l'invention, la ou au moins l'une des languettes (12A-12E; 14A - 14E, 16A- 16E, 18A-18D, 20A, 20D, 22A -22D) est mobile en rotation relativement au reste de la feuille (11) selon un axe de pliage (R), de sorte qu'elle présente une configuration de fabrication dans laquelle elle s'étend dans le plan principal (P) et une configuration pliée dans laquelle elle est placée dans un plan sensiblement perpendiculaire au plan principal. Ce mode de réalisation permet de simplifier encore la fabrication du dispositif puisqu'il n'est alors pas nécessaire de disposer d'un outil de moulage spécifique pour fabriquer celui-ci. Le dispositif (10) peut en effet être moulé à plat et découpé ensuite, ce qui permet de simplifier son procédé de fabrication et également d'économiser de la matière. Par « mobile en rotation », on entend que chaque languette peut être déplacée à volonté entre la configuration de fabrication et la configuration pliée.

Dans ce cas notamment, la feuille (11) est découpée le long d'une portion de contour (24) pour former la languette, un segment reliant les deux extrémités (26) de la portion de contour étant confondu avec l'axe de pliage de la languette. Dans ce cas également, la feuille (11) peut présenter au moins un orifice d'extrémité (26) à au moins une, notamment à chaque, jonction du segment confondu avec l'axe de pliage (R) d'une languette et de la portion de contour (24) découpée correspondante. Un tel orifice permet d'arrêter le contour de façon nette pour éviter une amorce de rupture prolongeant la découpe lorsque le dispositif est mis en place dans le module et que la languette subit des contraintes.

Dans un mode de réalisation de l'invention, la feuille (11) comprend au moins deux languettes (12A-12E; 14A - 14E, 16A- 16E; 18A-18D, 20A, 20D, 22A -22D) essentiellement perpendiculaires entre elles lorsqu'elles font saillie du plan principal de la feuille en s'étendant perpendiculairement au plan principal.

Dans un mode de réalisation de l'invention, le dispositif comprend au moins une rangée (12, 14, 16, 18, 20, 22) de languettes dont les droites d'intersection respectives avec le plan principal, correspondant notamment aux axes de pliage (R) respectifs de ces languettes, sont confondues. L'axe de pliage des languettes forment la droite d'intersection de la rangée (D12, D14, D16, D18, D20, D22) avec le plan principal (P).

Plus particulièrement, le dispositif comprend une première rangée (12, 14, 16) de languettes et une deuxième rangée de languette (18, 20, 22), disposée relativement à la première rangée de sorte que la droite d'intersection de la première rangée avec le plan principal est perpendiculaire à la droite d'intersection de la deuxième rangée avec le plan principal. Le dispositif peut notamment comprendre :
- une pluralité de premières rangées (12, 14, 16), la droite d'intersection d'une des premières rangées étant essentiellement parallèle à la droite d'intersection d'une autre première rangée, et/ou
- une pluralité de deuxièmes rangées (18, 20, 22) la droite d'intersection d'une des deuxièmes rangées étant essentiellement parallèle à la droite d'intersection d'une autre deuxième rangée.

Cette architecture permet d'isoler les supercapacités dans leurs zones de contact dans de nombreuses configurations de modules.

Dans un mode de réalisation de l'invention, au moins deux languettes (12A-12E; 14A - 14E, 16A- 16E, 18A-18D, 20A, 20D, 22A -22D) faisant saillie du même côté (i.e. sur la même face) de la feuille dans leur configuration pliée et présentant des axes de pliage essentiellement parallèles, ou confondus, les languettes étant configurées de sorte que les sens de rotation pour passer de la configuration de fabrication à la configuration pliée sont opposés.

Le dispositif peut notamment comprendre au moins une rangée (12, 14, 16, 20) de languettes dont les axes de pliage sont confondus, et dans lequel, pour au moins une, notamment chaque, rangée, le sens de rotation d'une languette donnée (12A-12E; 14A - 14E, 16A- 16E, 20A - 20D) pour passer d'une configuration de fabrication à une configuration pliée est opposé à celui de la ou des languettes de sa rangée qui lui sont adjacentes.

Le dispositif peut également comprendre deux languettes de deux rangées parallèles en chevauchement (c'est-à-dire qu'il existe au moins une perpendiculaire dans le plan principal à la droite d'intersection (D12, D14, D16, D18, D20, D22) d'au moins l'une des rangées de ces languettes), voire alignées, le sens de rotation d'une languette donnée (12A-12E; 14A - 14E, 16A- 16E, 20A - 20D) pour passer d'une configuration de fabrication à une configuration pliée étant opposé à celui d'au moins une languette avec laquelle elle est en chevauchement ou alignée.

Cela permet de stabiliser la position du dispositif dans le module. En effet, les languettes peuvent avoir tendance à retourner dans leur configuration de fabrication et à engendrer de ce fait un déplacement de la feuille (effet de glissement). Toutefois, lorsque les sens de rotation de deux languettes sont opposés, ces contraintes locales générées sur la feuille au niveau de chaque languette n'ont pas d'effet global car elles se compensent.

Dans un mode de réalisation de l'invention la feuille (11) comporte au moins un orifice (30 ; 32) situé à distance de toutes les languettes (12A-12E; 14A - 14E, 16A- 16E, 18A-18D, 20A, 20D, 22A -22D). Cet orifice (30) peut avoir pour fonction de laisser le passage à un renfort du module. Il peut alors par exemple se trouver à l'intersection de deux rangées de languettes du dispositif. Cet orifice (32) peut également avoir pour fonction de faciliter l'évacuation de la chaleur depuis les différents ensembles de stockage d'énergie vers l'extérieur du module. On a pu constater que, même avec de tels orifices, la résistance mécanique du dispositif d'isolation était suffisante pour l'utilisation à laquelle il est destiné.

Dans un mode de réalisation de l'invention, la feuille (11) est réalisée en matière plastique, notamment en polypropylène, tel que le PPHF (polypropylène hollow fiber). Les propriétés électriques de ce matériau sont suffisantes pour isoler deux éléments entre eux et ses autres propriétés (résistance mécanique, en température, etc.) permettent au dispositif de remplir parfaitement le cahier des charges pour être mis en place dans un module de stockage d'énergie.

Dans un mode de réalisation de l'invention, la feuille (11) et les languettes (12A-12E; 14A - 14E, 16A- 16E, 18A-18D, 20A, 20D, 22A -22D) ont une épaisseur inférieure à 1mm, notamment inférieure à 500 microns, de préférence comprise entre 200 et 300 microns. Une telle épaisseur est suffisante et permet aux languettes de facilement se glisser entre les ensembles du module, même lorsque ceux-ci sont fixés au contact les uns des autres, du fait du jeu de fixation du coeur de module (les ensembles ne sont chacun fixés qu'à deux ensembles adjacents).

L'invention a également pour objet un module (100) de stockage d'énergie comprenant une pluralité d'ensembles de stockage d'énergie (102) comportant chacun deux faces d'extrémité (108A, 108B) et au moins une face latérale (104), électriquement reliés en série et disposés côte à côte de sorte que les première faces d'extrémité respectives des ensembles sont situées sensiblement dans un même premier plan d'extrémité (P1), les deuxième faces d'extrémité respectives des ensembles étant situées sensiblement dans un même deuxième plan d'extrémité (P2) essentiellement parallèle au premier plan, le module comprenant également au moins un dispositif d'isolation (10) selon l'invention étant agencé de sorte que :
- Le plan principal (P) de la feuille est essentiellement parallèle aux premier et deuxième plans (P1 ; P2) et la feuille (11) est en superposition avec les faces d'extrémité (108A, 108B) d'au moins deux ensembles du module,
- la ou les languettes (12A-12E; 14A - 14E, 16A- 16E, 18A-18D, 20A, 20D, 22A - 22D) s'étendent dans un plan essentiellement perpendiculaire au plan principal de sorte que chaque languette est interposée entre deux ensembles de stockage d'énergie (102) dans une zone d'appui (116) entre ces deux éléments

Dans un mode de réalisation de l'invention, le module (100) comprend au moins un premier dispositif d'isolation (10A) placé sous les faces d'extrémité inférieures d'au moins deux ensembles de stockage et au moins un deuxième dispositif d'isolation (10B) placé sur les faces d'extrémité supérieures d'au moins deux ensembles.

Dans un mode de réalisation de l'invention, la feuille (11) d'au moins un dispositif d'isolation (10A, 10B) est dimensionnée pour recouvrir toutes les faces d'extrémité des ensembles accolés.

Dans un mode de réalisation de l'invention, dans un plan d'extrémité donné, au moins une barrette de connexion (112) relie électriquement les faces d'extrémité (108) de deux ensembles (102) adjacents, le ou les dispositifs d'isolation (10A, 10B) superposés avec ledit plan d'extrémité étant configurés de sorte que des languettes (12A-12E; 14A - 14E, 16A- 16E, 18A-18D, 20A, 20D, 22A -22D) soient interposées entre tous les ensembles adjacents à l'exception de ceux reliés par une barrette de connexion.

Ces différentes caractéristiques permet d'isoler la totalité des ensembles grâce à ce dispositif, assurant en outre un assemblage simple et une isolation efficace.

Dans un mode de réalisation particulier, chaque ensemble de stockage (102) comprend une enveloppe comprenant un boîtier (104) fermé à au moins une de ses extrémités par un couvercle (106A, 106B) comprenant une paroi (108A, 108B) formant une face d'extrémité et une collerette (110) entourant la ou les faces latérales du boîtier, la languette étant dimensionnée pour recouvrir l'ensemble sur au moins toute la hauteur de la collerette (110), notamment sur toute la hauteur de la collerette et de la barrette, dans la zone d'appui. La collerette augmentant la dimension radiale de l'ensemble au niveau de son extrémité, il n'est en effet pas nécessaire de dimensionner la languette pour qu'elle couvre toute la hauteur de l'ensemble.

Dans un mode de réalisation particulier, la dimension de chaque languette (12A-12E; 14A - 14E, 16A- 16E, 18A-18D, 20A, 20D, 22A -22D) selon la direction correspondant à celle de sa droite d'intersection (R) avec la feuille (11) est supérieure à la dimension de la zone d'appui entre deux ensembles selon cette direction. La dimension de la languette est de préférence supérieure à 1 cm, éventuellement à 3 cm. Cela permet de gérer le jeu de conception des ensembles. On choisit la dimension de la languette assez importante pour pouvoir autoriser des ensembles à faire partie du module même s'ils sont imparfaits relativement aux dimensions théoriques fixées, de façon à faire diminuer le taux de rebut de ces ensembles. La dimension selon la direction précitée de la languette est notamment dépendante du nombre d'ensembles dans la rangée et directement dépendante de la somme des jeux autorisés pour les ensembles d'une rangée, notamment supérieure à cette valeur.

Dans un mode de réalisation de l'invention, le module comprend un boîtier de protection entourant la totalité des ensembles de stockage d'énergie, ce boîtier comportant une paroi supérieure (120) et une paroi inférieure (122) superposée chacune avec un plan d'extrémité des ensembles, la feuille (11) du ou de chaque dispositif d'isolation étant agencée entre un plan d'extrémité des ensembles et la paroi correspondante (120, 122) de l'enveloppe.

Dans un mode de réalisation de l'invention, le module comprend également au moins un renfort reliant les parois supérieure (120) et inférieure (122) du boîtier du module, au moins un dispositif d'isolation (10A, 10B) comprenant au moins un orifice (30) permettant le passage du renfort, cet orifice étant de préférence placé à l'intersection d'une première et d'une rangée de languette.

Dans un mode de réalisation de l'invention, la feuille (11) du dispositif comprend au moins une partie superposée à au moins une barrette de connexion (112), au moins un orifice d'évacuation (32) étant ménagé dans cette partie pour permettre une meilleure évacuation de la chaleur depuis les ensembles (102) vers le boîtier.

Dans ce cas, un élément d'isolation électrique, et éventuellement de conduction thermique, peut être intercalé entre la feuille (11) et le boîtier, de façon à isoler les ensembles de l'extérieur.

L'invention a également pour objet un procédé de fabrication d'un dispositif d'isolation (10) selon l'invention, comprenant les étapes suivantes :
- on fabrique une feuille (11) réalisée en un matériau plastique électriquement isolant, notamment par extrusion,
- on découpe dans cette feuille le contour (24) d'au moins une languette (12A-12E; 14A - 14E, 16A- 16E, 18A-18D, 20A, 20D, 22A -22D), notamment par découpage mécanique,
- on agence la languette (12A-12E; 14A - 14E, 16A- 16E, 18A-18D, 20A, 20D, 22A - 22D) dans une configuration pliée dans laquelle la languette s'étend en saillie du plan principale de la feuille, par exemple dans laquelle la languette est essentiellement perpendiculaire au plan principal (P) de la feuille (11).

On va maintenant décrire en détails différents modes de réalisation de l'invention, basés sur les figures.

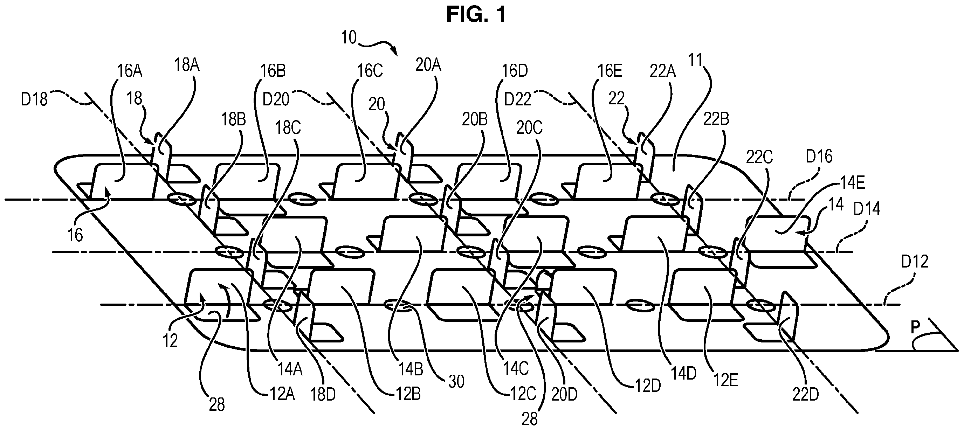

On a représenté sur la figure 1 un dispositif d'isolation 10. Comme on le voit sur cette figure, le dispositif est constitué d'une feuille 11 réalisée en un matériau plastique isolant électriquement tel que le polypropylène, notamment le PPHF (polypropylène hollow fibers) et s'étendant essentiellement dans un plan principal (P). Cette feuille est d'épaisseur inférieure à 1 mm, notamment à 500 microns, et notamment de 250 microns et est donc flexible.

Le dispositif 10 comprend également une pluralité de languettes 12A - 12E; 14A - 14E, 16A- 16E, 18A - 18D, 20A - 20D, 22A - 22D, s'étendant toutes du même côté de la feuille, dans un plan essentiellement perpendiculaire au plan principal (P). Les languettes sont réalisées d'une seule pièce avec la feuille 11.

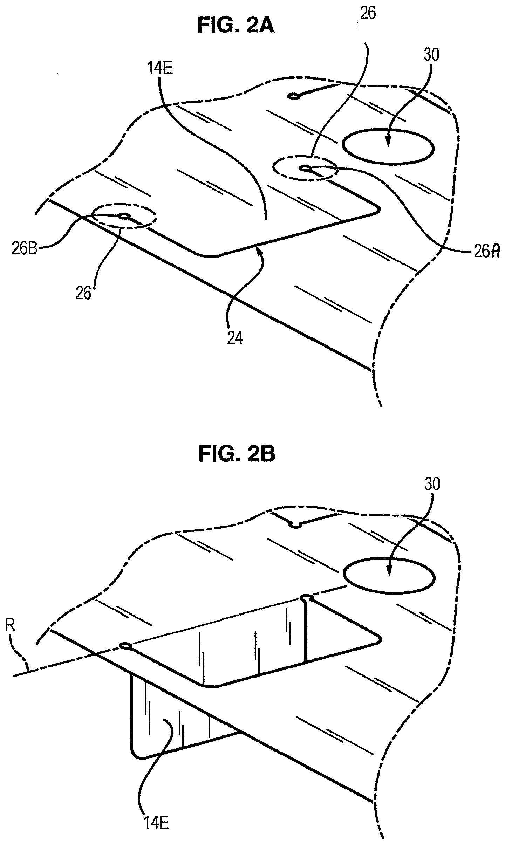

Ces languettes ont une forme essentiellement rectangulaire. Comme on le voit sur les figures 2A et 2B, chacune de ces languettes sont découpées dans la feuille 11 suivant un contour 24 correspondant à trois côtés du rectangle formant la languette et sont ensuite repliées relativement à un axe de pliage (R) correspondant au quatrième côté du rectangle formant la languette. L'axe de pliage correspond au segment reliant les deux extrémités du contour. Les languettes sont donc mobiles en rotation et aptes à passer d'une configuration de fabrication, montrée sur la figure 2A, dans laquelle elles s'étendent dans le plan (P) de la feuille, à une configuration pliée, montrée sur la figure 2A et dans laquelle elle s'étend dans un plan essentiellement perpendiculaire au plan principal (P). Cela permet de diminuer encore les coûts de fabrication du dispositif puisque celui-ci peut être fabriqué dans un seul plan (par exemple par extrusion) et ne nécessite donc pas une opération de moulage spécifique par pièce.

On remarque également, sur la figure 2B, qu'aux deux extrémités du contour 24 formant la languette, la feuille 11 présente deux orifices arrondis 26A, 26B, qui permettent d'éviter les amorces de rupture prolongeant la découpe dans la feuille et qui pourraient être une conséquence du pliage de la languette.

Comme on le voit sur la figure 1, le dispositif 10 comprend une pluralité de rangées 12, 14, 16, 18, 20, 22. Chaque rangée comprend une pluralité de languettes ayant des axes de pliage (R) confondus. L'axe de pliage commun entre les languettes correspond à la droite d'intersection (D12), (D14), (D16), (D18), (D20), (D22) de la rangée avec le plan (P). En particulier le dispositif comprend trois rangées 12 ; 14, 16 dont les droites d'intersection (D12), (D14), (D16) sont essentiellement parallèles, ces droites étant également parallèles à deux côtés de la feuille et trois rangées 18, 20, 22 ayant des droites d'intersection (D18), (D20), (D22) essentiellement parallèles et également parallèles à deux autres côtés de la feuille. Les droites d'intersection des rangées 12-16 et celle des rangées 18-22 sont donc également essentiellement perpendiculaires. Les languettes sont d'ailleurs placées dans les différentes rangées de sorte qu'aucune languette ne soit placée à l'intersection des rangées.

On remarque également que, dans chaque rangée 12, 14, 16 et 20, les languettes en configuration pliée s'étendent dans un même plan, essentiellement perpendiculaire au plan principal (P) mais les orifices laissés dans la feuille et correspondant à la position de la languette dans la configuration de fabrication s'étendent de chaque côté de ce plan. Cela signifie que la rotation d'une première partie des languettes de chaque rangée 12, 14, 16, 20 doit être effectuée selon un sens de rotation donné pour passer la languette de sa configuration de fabrication à sa configuration pliée, alors que, pour l'autre partie des languettes de la rangée, le sens de rotation pour passer la languette de sa configuration de fabrication à sa configuration pliée est l'opposé du sens de rotation donné. Par exemple, concernant la rangée 12, les languettes 12A, 12C, 12E, doivent subir une rotation dans un premier sens alors que les languettes 12B et 12D doivent subir une rotation dans un sens opposé au premier (mais toujours selon le même axe) pour passer de leur configuration de fabrication à leur configuration pliée. Dans ces rangées, les languettes subissant une rotation selon un premier sens et les autres sont alternées de sorte que, pour chaque languette subissant une rotation dans un sens donné pour passer d'une configuration de fabrication à une configuration pliée, les languettes adjacentes de la même rangée subissent une rotation dans le sens contraire pour ce faire.

On remarque également que les languettes des différentes rangées sont disposées de façon à se chevaucher, c'est-à-dire qu'il existe au moins une perpendiculaire dans le plan principal (P) à la droite d'intersection d'au moins l'une des rangées passant par plusieurs languettes appartenant à des rangées différentes. Les languettes 12B ; 14A et 16B par exemple se chevauchent, de même que les languettes 18D, 20D et 22D.

Dans l'exemple de la figure 1, les languettes des différentes rangées sont disposées à égale distance les uns des autres et les languettes des différentes rangées sont toutes alignées. (12B, 14A, 16B par exemple), ce qui signifie que les extrémités de leurs axes de pliage sont situées sur deux droites essentiellement parallèles et essentiellement perpendiculaire à la droite d'intersection (D12), (D14), (D16) de l'une ou l'autre des rangées. La rangées 14 est décalée relativement aux rangées 12 et 16 et comprend donc une languette qui n'est alignée avec aucune des autres.

Or, comme on le remarque, le dispositif est également configuré de sorte que, parmi les languettes alignées de différentes rangées, il existe une ou plusieurs languettes qui passent de la configuration de fabrication à la configuration pliée grâce à une rotation selon un sens donné (12B) alors qu'une ou plusieurs autres languettes (14A, 16B) passent de la configuration de fabrication à la configuration pliée grâce à une rotation selon le sens opposé au sens donné. Cela est le cas pour toutes les languettes alignées (12A/16A; 12C/14B, 16C ; 18D, 20D/22D, par exemple).

Ces choix de conception sont particulièrement avantageux, puisqu'ils permettent de maintenir le dispositif d'isolation en place lorsque celui-ci subit des contraintes. En effet, les contraintes exercées par les languettes pour retourner dans leur position initiale sont alors opposées, ce qui permet de garantir le maintien en place du dispositif dans le module et d'éviter les phénomènes de glissement.

On voit également que les languettes des rangées 12, 14, 16 suivant les plus grand côtés de la feuille 12 sont de plus grande largeur que les languettes des rangées 18, 20, 22 suivant les plus petits côtés de la feuille 12.

On voit également sur la figure 1 des orifices ronds 30 situés à distance des languettes dont certains sont situés au niveau des intersections des rangées essentiellement perpendiculaires entre elles. Ces orifices sont conformés pour permettre le passage d'un renfort du module.

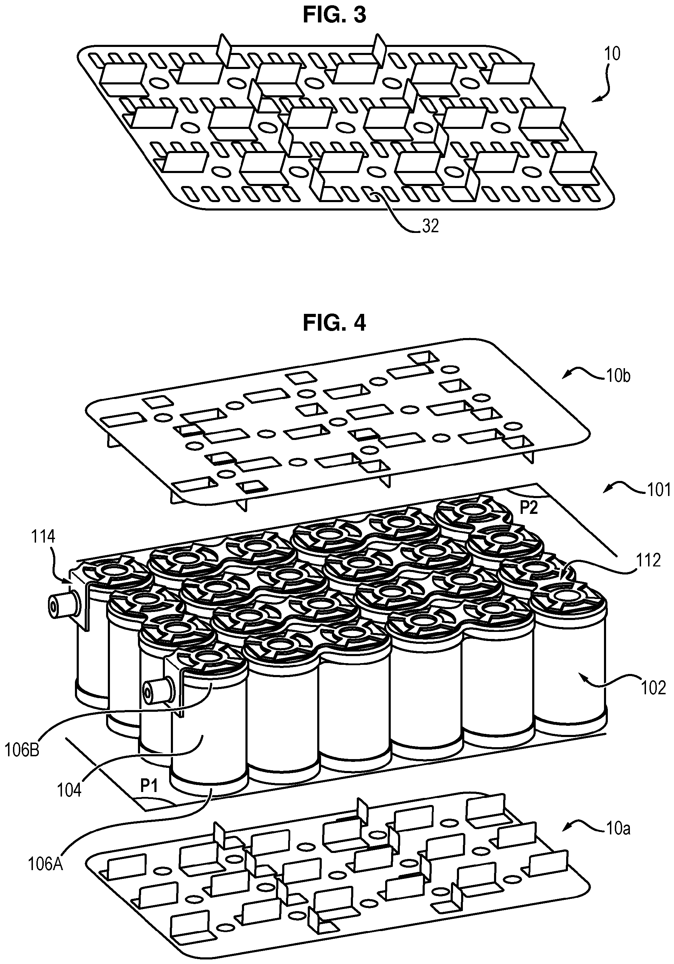

On notera que le dispositif selon l'invention peut être différent de ce qui a été décrit. Comme représenté à la figure 3, il peut comprendre des fonctions supplémentaires, notamment des ajours 32 pour permettre une meilleure évacuation de la chaleur des ensembles vers l'extérieur du module.

La disposition des languettes et le nombre des languettes peut également être totalement différent de ce qui a été décrit : par exemple, les languettes peuvent ne pas être disposées en rangées, et/ou non alignées et/ou ne pas présenter différents sens de rotation. Une unique languette s'étendant essentiellement sur toute la longueur de la feuille 11 peut par exemple être mise en place pour isoler plusieurs ensembles les uns des autres et remplacer toutes les languettes d'une rangée donnée.

Le dispositif 10 selon l'invention est fabriqué très simplement de la façon suivante. La feuille 11 est fabriquée par extrusion (la matière est extrudée puis sort dans une filière et est laminée par des rouleaux de façon à former un film). Ce film est fabriqué en continu et est de longueur très grande. Son coût de fabrication est de fait assez limité. Ensuite, on découpe le film, notamment à l'aide d'un découpage mécanique, pour le mettre aux dimensions du module et pour former dans celui-ci les languettes et les éventuels orifices et ajours. On pourrait également former ces languettes par poinçonnage. On plie ensuite toutes les languettes de la feuille. L'étape de découpage et éventuellement l'étape de pliage peuvent être effectuées automatiquement, à l'aide d'une machine-outil spécialement programmée pour ce faire, ce qui permet également un gain de temps lors de la fabrication.

Le dispositif peut être également moulé de sorte que les languettes font saillie du plan principal dès la fabrication. L'épaisseur et le matériau du dispositif ne sont pas non plus limités à ce qui a été décrit ici.

On va maintenant décrire l'interaction du dispositif 10 avec un module d'ensembles de stockage d'énergie 100.

Un tel module 100 comprend une pluralité d'ensembles 102 (ici, au nombre de 24) disposés côte à côte pour former un coeur de module 101 représenté sur la figure 4 et comprenant quatre rangées de six ensembles 102.

Dans l'exemple décrit ici, les ensembles 102 sont des supercapacités et comprennent chacun une enveloppe comprenant un tube 104 fermé à chacune de ces extrémités par un couvercle 106A, 106B et renfermant la partie du produit permettant le stockage de l'énergie, que l'on ne détaillera pas ici. L'enveloppe est de forme essentiellement cylindrique et chaque couvercle 106A, 106B est conformé pour comprendre une paroi fermant le tube et formant face d'extrémité 108A, 108B de l'ensemble et une collerette 110 entourant le tube 104 sur une hauteur inférieure à la hauteur du tube, notamment à un dixième de la hauteur du tube.

Les couvercles de chacun des ensembles sont réalisés en métal et sont conducteurs de l'électricité. Chacun des couvercles 106A, 106B est notamment relié à une borne (positive ou négative) de l'ensemble. Un joint isolant 111 interposé entre le couvercle 106A, 106B et le tube 104 permet d'isoler électriquement les bornes l'une de l'autre. Chacune des bornes de l'ensemble de stockage présente un potentiel distinct.

Les ensembles sont identiques (mêmes dimensions, etc.) et, lorsqu'ils sont disposés côte à côte pour former le coeur de module 101, les faces d'extrémité 108A, respectivement 108B, des ensembles 102 s'étendent dans un même plan d'extrémité (P1), respectivement (P2).

Les ensembles sont reliés deux à deux par l'intermédiaire de barrettes de connexion 112. Les ensembles sont généralement reliés électriquement en série par une première barrette 112 au niveau de l'une de ses faces d'extrémité 108A à un ensemble adjacent et par une deuxième barrette, au niveau de l'autre de ses faces d'extrémité 108B, à un autre ensemble 102. Les barrettes relient deux bornes de deux ensembles adjacents, les deux bornes électriquement reliées étant alors au même potentiel. On notera que les deux autres bornes des deux ensembles considérés, également adjacentes, présentent quant à elles des potentiels différents.

Ces ensembles sont reliés de sorte que le couvercle 106A, 106B de chaque ensemble est en contact au niveau d'une zone d'appui avec les couvercles de tous les ensembles adjacents, même s'il n'est pas relié par les barrettes 112 à celui-ci. Deux ensembles d'extrémité ne sont pas reliés au niveau du plan d'extrémité P2 à un autre ensemble mais sont reliés à des bornes d'entrée/sortie 114 qui s'étendent à l'extérieur du module et forment les bornes de celui-ci.

La totalité des ensembles connectés forme le coeur du module 101. Ce coeur est placé dans un boîtier 120 comprenant une paroi inférieure 122, une paroi supérieure 124 et au moins une paroi latérale 126, notamment quatre dans l'exemple. Les dispositifs 10A, 10B sont placés de sorte que plan principal (P) de leur feuille 11 respective soit interposé entre les plan d'extrémité supérieur (P2), respectivement inférieur (P2), du coeur de module 101 et la face correspondante 122, 124 du boîtier 120. D'autres éléments sont intercalés entre le coeur de module et le boîtier, comme une carte électronique de gestion, des renforts mécaniques, un tapis thermique pour l'évacuation de la chaleur, des pièces d'habillage des parois du boîtier, etc. Toutefois, ces éléments ne font pas réellement partie de l'invention et nous ne les détaillerons donc pas ici.

On va maintenant décrire comment le dispositif d'isolation 10 interagit avec le module.

Comme on le voit sur la figure 4, le dispositif 10 est interposé entre le plan d'extrémité (P1), (P2) du coeur du module 101 et une paroi 122, 124 du boîtier 120. Le plan principal (P) du dispositif 10A, 10B est essentiellement parallèle au plan (P1), (P2) des faces d'extrémités 108A, 108B du coeur de module 101. Les languettes de chaque dispositif sont orientées vers les ensembles 102, de façon à s'étendre entre ceux-ci. Les languettes du dispositif 10A s'étendent vers le haut tandis que les languettes de dispositif 10B s'étendent vers le bas. La feuille 11 est conformée pour recouvrir la totalité des ensembles et présente donc approximativement les mêmes dimensions que la paroi correspondante du boîtier.

Lorsque la feuille 11 est posée sur les barrettes 112 recouvrant les faces d'extrémités 108, les languettes s'insèrent entre les zones en contact 116 des ensembles : au vu de leur épaisseur réduite, le jeu qu'il existe au niveau des fixations des ensembles suffit pour que celles-ci puissent être insérées entre deux ensembles.

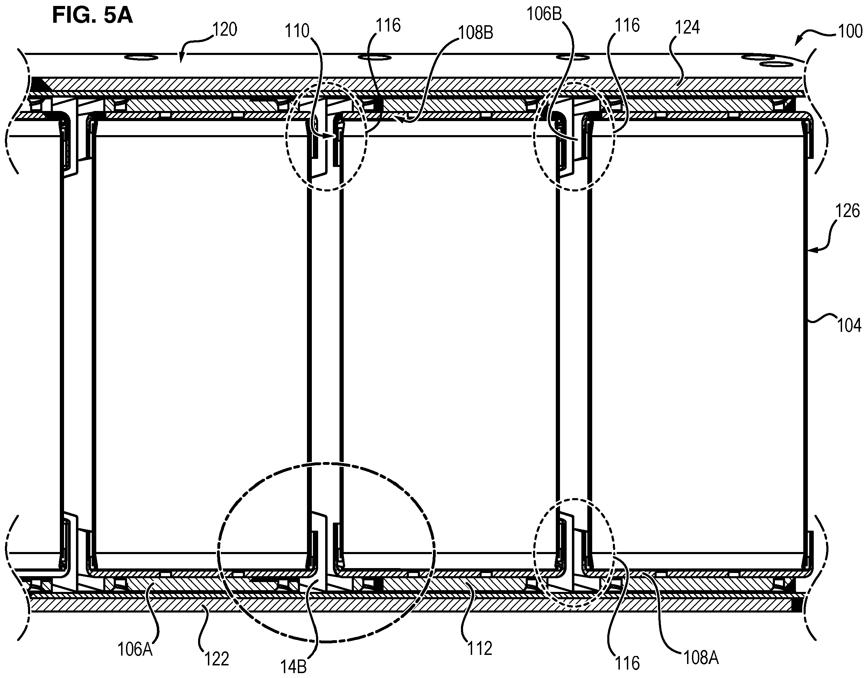

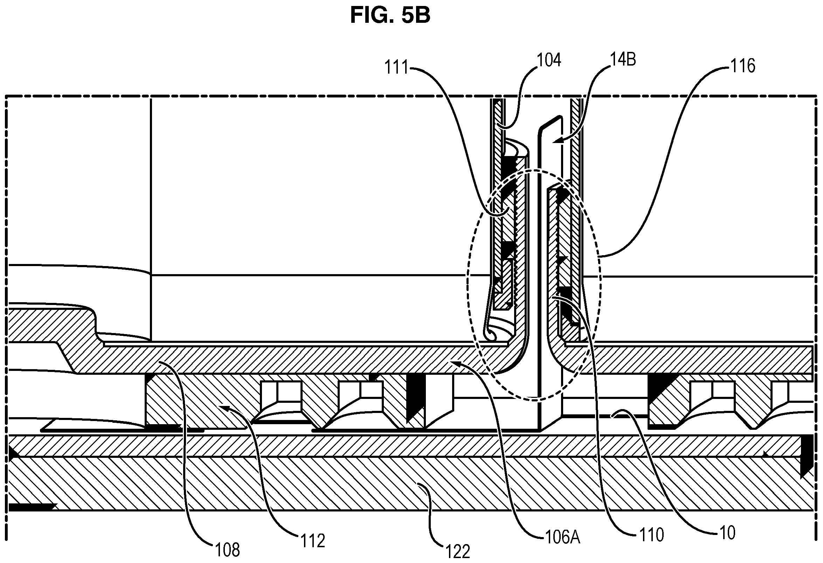

Comme on le voit sur la figure 5, la hauteur des languettes dans la configuration pliée de celles-ci est supérieure à la hauteur de la collerette 110 du couvercle 106A, 106B. En effet, du fait de la présence de la collerette 110, au niveau du reste du tube 104, la distance entre deux ensembles adjacents est suffisante pour les isoler l'un de l'autre.

Les languettes sont positionnées sur les feuilles 11 de sorte qu'au niveau de chaque extrémité du coeur de module, pour chaque ensemble, une languette soit insérée entre chaque ensemble et tous les ensembles qui lui sont adjacents, à l'exception de celui auquel l'ensemble est lié par une barrette 112 au niveau de la face d'extrémité 108A, 108B sur laquelle est positionnée le dispositif 10A, 10B. On remarque d'ailleurs que les dispositifs 10 situés aux extrémités supérieure et inférieure du coeur de module ne sont pas les mêmes, les connexions inter-éléments n'étant pas les mêmes. Le dispositif 10B correspond au dispositif décrit sur la figure 1. Autrement dit, une borne donnée d'un ensemble de stockage d'énergie donné est isolée par la feuille 11 de toutes les bornes des ensembles adjacents, à l'exception de la borne à laquelle elle est reliée, à savoir de trois bornes par trois languettes adjacentes. Les bornes respectives d'un même ensemble sont donc isolées par le biais des feuilles des bornes de trois des ensembles adjacents. Toutefois, pour un ensemble donné, accolé à quatre ensembles adjacents, l'une des bornes est isolée par le biais d'une des feuilles des bornes de trois des ensembles parmi les quatre adjacents, alors que l'autre des bornes est isolée par le biais de l'autre feuille de trois autres des ensembles parmi les quatre adjacents.

On a indiqué plus haut que les languettes n'avaient d'utilité que dans les zones où les ensembles étaient susceptibles d'être en appui. Or, comme on l'a également noté, ces ensembles sont délimités par des enveloppes cylindriques. Le contact entre eux est donc un contact linéaire. Cependant, du fait des jeux relativement importants qui sont autorisés au niveau des enveloppes et notamment au niveau de la concentricité des couvercles, on prévoit que le contact entre deux ensembles peut se faire sur une plage donnée au voisinage du lieu du contact supposé. Cette plage correspond à la somme des tolérances des jeux sur les enveloppes des ensembles contenus dans cette rangée.

La dimension des languettes selon la direction de son axe (R) permet de gérer ce jeu puisqu'elle correspond ou est supérieure à la dimension de cette plage, de sorte qu'elle puisse isoler les ensembles quelle que soit le lieu du contact entre deux ensembles 102. Ainsi, cela explique la différence de dimension entre les languettes des rangées 18, 20, 22 (qui doivent couvrir une plage correspondant au jeu de quatre ensembles) et celles des rangées 12, 14, 16 (qui doivent couvrir une plage correspondant au jeu de six ensembles).

Le jeu entre les ensembles selon la direction perpendiculaire à la dimension de l'axe (R) de la languette est gérée grâce à la flexibilité de la languette qui peut être pliée à un angle différent de 90° selon les besoins ou recouvrir en partie la face d'extrémité d'un élément lorsque son axe de pliage n'est pas exactement en face de l'interface entre deux éléments.

Ainsi, le dispositif d'isolation 10 permet de garantir l'isolation des éléments entre eux et s'installe très simplement sur le coeur de module 101 puisqu'il suffit de le poser sur une face du module et d'ajuster la position de chacune des languettes par rapport à la position des éléments. On retourne ensuite le coeur de module et on fait la même chose concernant l'autre face d'extrémité du module.

On notera que le module n'est pas forcément semblable à celui qui a été décrit. Les ensembles peuvent être de formes différentes de ce qui a été décrit. De même, les différentes parois du boîtier du module peuvent être agencées différemment de ce qui a été décrit (l'ensemble peut par exemple ne comprendre qu'un couvercle) et les connexions peuvent également être effectuées par des barrettes agencées différemment que ce qui a été décrit, voire par d'autres moyens.

En outre, il pourrait y avoir un dispositif d'isolation selon l'invention à une extrémité du module et un autre moyen d'isolation pour l'autre extrémité. De même, le dispositif d'isolation pourrait être agencé pour couvrir d'une seule pièce les deux plans d'extrémité supérieur et inférieur du coeur de module. On pourrait également envisager qu'il y ait plusieurs dispositifs d'isolation par face du coeur de module. Cela pourrait par exemple être utile dans le cas où l'on dispose de modules de différentes tailles et que l'on souhaite utiliser un dispositif d'isolation standard pour tous ces modules.

## Revendications

1. Dispositif d'isolation (10) pour isoler électriquement les uns des autres une pluralité d'ensembles (102) de stockage d'énergie disposés côte à côte dans un module (100) de stockage d'énergie, le dispositif comprenant une feuille (11) réalisée en un matériau flexible, isolant électriquement et s'étendant selon un plan principal (P), le dispositif comprenant également au moins une languette (12A-12E; 14A - 14E, 16A- 16E, 18A-18D, 20A, 20D, 22A - 22D) d'un seul tenant avec la feuille (11) pour isoler électriquement deux ensembles de stockage (102) adjacents, qui ne sont pas reliés entre eux par une barrette de connexion électrique, ladite languette étant réalisée dans un matériau isolant et étant destinée à s'étendre en saillie du plan principal de sorte à être positionnée entre deux ensembles de stockage adjacents, **caractérisé en ce que**
la ou au moins l'une des languettes (12A-12E; 14A - 14E, 16A- 16E, 18A-18D, 20A, 20D, 22A -22D) est mobile en rotation relativement au reste de la feuille (11) selon un axe de pliage (R), de sorte qu'elle présente une configuration de fabrication dans laquelle elle s'étend dans le plan principal (P) et une configuration pliée dans laquelle elle est placée dans un plan sensiblement perpendiculaire au plan principal.

2. Dispositif selon la revendication 1, dans lequel la feuille (11) est découpée le long d'une portion de contour (24) pour former la languette, un segment reliant les deux extrémités (26) de la portion de contour étant confondu avec l'axe de pliage de la languette.

3. Dispositif selon la revendication 2, dans lequel la feuille (11) présente au moins un orifice d'extrémité (26) à au moins une, notamment à chaque, jonction du segment confondu avec l'axe de pliage (R) d'une languette et de la portion de contour (24) découpée correspondante.

4. Dispositif d'isolation selon l'une quelconque des revendications précédentes, dans lequel la feuille (11) comprend au moins deux languettes (12A-12E; 14A - 14E, 16A- 16E; 18A-18D, 20A, 20D, 22A -22D) essentiellement perpendiculaires entre elles lorsqu'elles font saillie du plan principal de la feuille en s'étendant sensiblement perpendiculairement au plan principal.

5. Dispositif selon l'une quelconque des revendications précédentes, comprenant au moins une rangée (12, 14, 16, 18, 20, 22) de languettes dont les droites d'intersection (D12, D14, D16, D18, D20, D22) respectives avec le plan principal, correspondant notamment aux axes de pliage (R) respectifs de ces languettes, sont confondues, et forment la droite d'intersection de la rangée avec le plan principal.

6. Dispositif selon la revendication 5, comprenant au moins une première rangée (12, 14, 16) de languettes et au moins une deuxième rangée de languette (18, 20, 22), disposée relativement à la première rangée de sorte que la droite d'intersection (D12, D14, D16) de la première rangée avec le plan principal est essentiellement perpendiculaire à la droite d'intersection (D18, D20, D22) de la deuxième rangée avec le plan principal.

7. Dispositif d'isolation selon l'une quelconque des revendications précédentes, comprenant au moins deux languettes (12A-12E; 14A - 14E, 16A- 16E, 18A-18D, 20A, 20D, 22A -22D) faisant saillie du même côté de la feuille dans leur configuration pliée et présentant des axes de pliage essentiellement parallèles, ou confondus, les languettes étant configurées de sorte que les sens de rotation pour passer de la configuration de fabrication à la configuration pliée sont opposés.

8. Dispositif selon l'une quelconque des revendications précédentes, dans lequel la feuille (11) comporte au moins un orifice (32) situé à distance de toutes les languettes (12A-12E; 14A - 14E, 16A- 16E, 18A-18D, 20A, 20D, 22A -22D).

9. Dispositif selon l'une quelconque des revendications précédentes, dans laquelle la feuille est réalisée en matière plastique, notamment en polypropylène, tel que le PPHF (polypropylène hollow fiber).

10. Dispositif selon l'une quelconque des revendications précédentes, dans lequel la feuille (11) et les languettes (12A-12E; 14A - 14E, 16A- 16E, 18A-18D, 20A, 20D, 22A -22D) ont une épaisseur inférieure à 1mm, notamment inférieure à 500 microns, de préférence comprise entre 200 et 300 microns.

11. Module (100) de stockage d'énergie comprenant une pluralité d'ensembles de stockage d'énergie (102) comportant chacun deux faces d'extrémité (108A, 108B) et au moins une face latérale (104), électriquement reliés en série et disposés côte à côte de sorte que les première faces d'extrémité (108A) respectives des ensembles sont situées sensiblement dans un même premier plan d'extrémité (P1), les deuxième faces d'extrémité (108B) respectives des ensembles étant situées sensiblement dans un même deuxième plan d'extrémité (P2) essentiellement parallèle au premier plan, le module comprenant également au moins un dispositif d'isolation (10) selon l'une quelconque des revendications 1 à 10 agencé de sorte que :
- le plan principal (P) de la feuille est essentiellement parallèle aux premier et deuxième plans d'extrémité (P1, P2) et la feuille (11) est en superposition avec les faces d'extrémité (108) d'au moins deux ensembles du module,
- la ou les languettes (12A-12E; 14A - 14E, 16A- 16E, 18A-18D, 20A, 20D, 22A -22D) s'étendent dans un plan essentiellement perpendiculaire au plan principal de sorte que chaque languette est interposée entre deux ensembles de stockage d'énergie (102) dans une zone d'appui (116) entre ces deux éléments.

12. Module (100) selon la revendication 11, comprenant au moins un premier dispositif d'isolation (10A) placé sous les faces d'extrémité inférieures (108A) d'au moins deux ensembles de stockage et au moins un deuxième dispositif d'isolation (10B) placé sur les faces d'extrémité supérieures (108B) d'au moins deux ensembles.

13. Module (100) selon la revendication 11 ou 12, dans lequel la feuille (11) d'au moins un dispositif d'isolation (10A, 10B) est dimensionnée pour recouvrir toutes les faces d'extrémité des ensembles accolés.

14. Module (100) selon l'une quelconque des revendications 11 à 13, dans lequel, dans un plan d'extrémité donné, au moins une barrette de connexion (112) relie électriquement les faces d'extrémité (108A, 108B) de deux ensembles (102) adjacents, le ou les dispositifs d'isolation (10A, 10B) superposés avec ledit plan d'extrémité étant configurés de sorte que des languettes (12A-12E; 14A - 14E, 16A- 16E, 18A-18D, 20A, 20D, 22A -22D) soient interposées entre tous les ensembles adjacents à l'exception de ceux reliés par une barrette de connexion.

15. Module (100) selon l'une quelconque des revendications 11 à 14, dans lequel chaque ensemble de stockage (102) comprend une enveloppe comprenant un boîtier (104) fermé à au moins une de ses extrémités par un couvercle (106A, 106B) comprenant une paroi (108A, 108B) formant une face d'extrémité et une collerette (110) entourant la ou les faces latérales du boîtier, la languette étant dimensionnée pour recouvrir l'ensemble sur au moins toute la hauteur de la collerette dans la zone d'appui.

16. Module selon l'une quelconque des revendications 11 à 15, dans lequel la dimension de chaque languette (12A-12E; 14A - 14E, 16A- 16E, 18A-18D, 20A, 20D, 22A -22D) selon la direction correspondant à celle de sa droite d'intersection (R) avec la feuille (11) est supérieure à la dimension de la zone d'appui entre deux ensembles selon cette direction.

17. Module (100) selon l'une quelconque des revendications 11 à 16, comprenant un boîtier de protection entourant la totalité des ensembles de stockage d'énergie, ce boîtier (120) comportant une paroi supérieure (124) et une paroi inférieure (122) superposée chacune avec un plan d'extrémité des ensembles, la feuille (11) du ou de chaque dispositif d'isolation étant agencée entre un plan d'extrémité des ensembles et la paroi correspondante (120, 122) de l'enveloppe.

18. Procédé de fabrication d'un dispositif d'isolation (10) selon l'une quelconque des revendications 1 à 10, **caractérisé en ce qu'**il comprend les étapes suivantes :
- on fabrique une feuille (11) réalisée en un matériau plastique électriquement isolant, notamment par extrusion,
- on découpe dans cette feuille le contour (24) d'au moins une languette (12A-12E; 14A - 14E, 16A- 16E, 18A-18D, 20A, 20D, 22A -22D), notamment par découpage mécanique,
- on agence la languette (12A-12E; 14A - 14E, 16A- 16E, 18A-18D, 20A, 20D, 22A - 22D) dans une configuration pliée, dans laquelle est essentiellement perpendiculaire au plan principal (P) de la feuille (11).

## Patentansprüche

1. Isolationsvorrichtung (10), um eine Vielzahl von Energiespeichereinheiten (102), die in einem Energiespeichermodul (100) nebeneinander angeordnet sind, elektrisch voneinander zu isolieren, wobei die Vorrichtung eine Folie (11) umfasst, die aus einem flexiblen elektrisch isolierenden Material hergestellt ist und sich gemäß einer Hauptebene (P) erstreckt, wobei die Vorrichtung ebenfalls mindestens eine mit der Folie (11) einstückige Zunge (12A-12E; 14A-14E, 16A-16E, 18A-18D, 20A, 20D, 22A-22D) umfasst, um zwei benachbarte Speichereinheiten (102) elektrisch zu isolieren, die untereinander nicht durch eine elektrische Verbindungsleiste verbunden sind, wobei die Zunge aus einem isolierenden Material hergestellt und bestimmt ist, sich aus der Hauptebene herausragend derart zu erstrecken, dass sie zwischen zwei benachbarten Speichereinheiten positioniert ist, **dadurch gekennzeichnet, dass**
die oder mindestens eine der Zungen (12A-12E; 14A-14E, 16A-16E, 18A-18D, 20A, 20D, 22A-22D) relativ zum Rest der Folie (11) gemäß einer Faltachse (R) derart rotierend beweglich ist, dass sie eine Herstellungskonfiguration aufweist, in welcher sie sich in der Hauptebene (P) erstreckt, und eine gefaltete Konfiguration, in welcher sie in einer zur Hauptebene etwa senkrechten Ebene platziert ist.

2. Vorrichtung nach Anspruch 1, wobei die Folie (11) entlang eines Konturabschnitts (24) geschnitten ist, um die Zunge zu bilden, wobei ein Segment, welches die zwei Enden (26) des Konturabschnitts verbindet, mit der Faltachse der Zunge zusammenfällt.

3. Vorrichtung nach Anspruch 2, wobei die Folie (11) mindestens eine Endöffnung (26) an mindestens einer, insbesondere an jeder Verbindung des Segments, welches mit der Faltachse (R) einer Zunge und mit dem entsprechenden geschnittenen Konturabschnitt (24) zusammenfällt, aufweist.

4. Isolationsvorrichtung nach einem der vorangehenden Ansprüche, wobei die Folie (11) mindestens zwei Zungen (12A-12E; 14A-14E, 16A-16E; 18A-18D, 20A, 20D, 22A-22D) umfasst, die im Wesentlichen senkrecht zueinander sind, wenn sie aus der Hauptebene der Folie, indem sie sich etwa senkrecht zur Hauptebene erstrecken, herausragen.

5. Vorrichtung nach einem der vorangehenden Ansprüche, umfassend mindestens eine Reihe (12, 14, 16, 18, 20, 22) von Zungen, deren jeweilige Schnittgeraden (D12, D14, D16, D18, D20, D22) mit der Hauptebene, die insbesondere mit den jeweiligen Faltachsen (R) dieser Zungen übereinstimmen, zusammenfallen, und die Schnittgerade der Reihe mit der Hauptebene bilden.

6. Vorrichtung nach Anspruch 5, umfassend mindestens eine erste Reihe (12, 14, 16) von Zungen und mindestens eine zweite Zungenreihe (18, 20, 22), die relativ zu der ersten Reihe derart angeordnet ist, dass die Schnittgerade (D12, D14, D16) der ersten Reihe mit der Hauptebene im Wesentlichen senkrecht zu der Schnittgeraden (D18, D20, D22) der zweiten Reihe mit der Hauptebene ist.

7. Isolationsvorrichtung nach einem der vorangehenden Ansprüche, umfassend mindestens zwei Zungen (12A-12E; 14A-14E, 16A-16E, 18A-18D, 20A, 20D, 22A-22D), die in ihrer gefalteten Konfiguration auf derselben Seite der Folie herausragen und im Wesentlichen parallele oder zusammenfallende Faltachsen aufweisen, wobei die Zungen derart konfiguriert sind, dass die Rotationsrichtungen, um aus der Herstellungskonfiguration in die gefaltete Konfiguration zu gelangen, entgegengesetzt sind.

8. Vorrichtung nach einem der vorangehenden Ansprüche, wobei die Folie (11) mindestens eine Öffnung (32) aufweist, die sich beabstandet von allen Zungen (12A-12E; 14A-14E, 16A-16E, 18A-18D, 20A, 20D, 22A-22D) befindet.

9. Vorrichtung nach einem der vorangehenden Ansprüche, wobei die Folie aus Kunststoff, insbesondere aus Polypropylen wie PPHF (Polypropylene Hollow Fiber), hergestellt ist.

10. Vorrichtung nach einem der vorangehenden Ansprüche, wobei die Folie (11) und die Zungen (12A-12E; 14A-14E, 16A-16E, 18A-18D, 20A, 20D, 22A-22D) eine Stärke unter 1 mm, insbesondere unter 500 Mikron, vorzugsweise zwischen 200 und 300 Mikron inklusive, haben.

11. Energiespeichermodul (100), umfassend eine Vielzahl von Energiespeichereinheiten (102), die jeweils zwei Endflächen (108A, 108B) und mindestens eine Seitenfläche (104) aufweisen, die in Reihe elektrisch verbunden und nebeneinander derart angeordnet sind, dass sich die jeweiligen ersten Endflächen (108A) der Einheiten etwa in einer gleichen Endebene (P1) befinden, wobei sich die jeweiligen zweiten Endflächen (108B) der Einheiten etwa in einer gleichen zweiten Endebene (P2) befinden, die im Wesentlichen parallel zur ersten Ebene ist, wobei das Modul ebenfalls mindestens eine Isolationsvorrichtung (10) nach einem der Ansprüche 1 bis 10 umfasst, ausgebildet derart, dass:
- die Hauptebene (P) der Folie im Wesentlichen parallel zu der ersten und zweiten Endebene (P1, P2) ist und die Folie (11) mit den Endflächen (108) von mindestens zwei Einheiten des Moduls übereinanderliegen,
- sich die Zunge(n) (12A-12E; 14A-14E, 16A-16E, 18A-18D, 20A, 20D, 22A-22D) in einer Ebene erstreckt/erstrecken, die im Wesentlichen senkrecht zur Hauptebene ist, derart, dass sich jede Zunge zwischen zwei Energiespeichereinheiten (102) in einer Stützzone (116) zwischen diesen zwei Elementen befindet.

12. Modul (100) nach Anspruch 11, umfassend mindestens eine erste Isolationsvorrichtung (10A), die unter den unteren Endflächen (108A) von mindestens zwei Speichereinheiten platziert ist, und mindestens eine zweite Isolationsvorrichtung (10B), die über den oberen Endflächen (108B) von mindestens zwei Einheiten platziert ist.

13. Modul (100) nach Anspruch 11 oder 12, wobei die Folie (11) mindestens einer Isolationsvorrichtung (10A, 10B) bemessen ist, um alle Endflächen der anliegenden Einheiten zu bedecken.

14. Modul (100) nach einem der Ansprüche 11 bis 13, wobei, in einer bestimmten Endebene, mindestens eine Anschlussleiste (112) die Endflächen (108A, 108B) von zwei benachbarten Einheiten (102) elektrisch verbindet, wobei die mit der Endebene übereinanderliegenden Isolationsvorrichtung(en) (10A, 10B) derart konfiguriert ist/sind, dass Zungen (12A-12E; 14A-14E, 16A-16E, 18A-18D, 20A, 20D, 22A-22D) zwischen allen benachbarten Einheiten angeordnet sind, mit Ausnahme derer, die durch eine Anschlussleiste verbunden sind.

15. Modul (100) nach einem der Ansprüche 11 bis 14, wobei jede Speichereinheit (102) einen Mantel umfasst, umfassend ein Gehäuse (104), das an mindestens einem seiner Enden durch einen Deckel (106A, 106B) verschlossen ist, umfassend eine Wand (108A, 108B), welche eine Endfläche bildet, und einen Ring (110), welcher die Seitenfläche(n) des Gehäuses umgibt, wobei die Zunge bemessen ist, um die Einheit über mindestens die gesamte Höhe des Rings in der Stützzone zu bedecken.

16. Modul nach einem der Ansprüche 11 bis 15, wobei die Abmessung jeder Zunge (12A-12E; 14A-14E, 16A-16E, 18A-18D, 20A, 20D, 22A-22D) gemäß der Richtung, welche der ihrer Schnittgeraden (R) mit der Folie (11) entspricht, größer als die Abmessung der Stützzone zwischen zwei Einheiten gemäß dieser Richtung ist.

17. Modul (100) nach einem der Ansprüche 11 bis 16, umfassend ein Schutzgehäuse, welches die Gesamtheit der Energiespeichereinheiten umgibt, wobei dieses Gehäuse (120) eine obere Wand (124) und eine untere Wand (122) aufweist, die jeweils mit einer Endebene der Einheiten übereinanderliegen, wobei die Folie (11) der oder jeder Isolationsvorrichtung zwischen einer Endebene der Einheiten und der entsprechenden Wand (120, 122) des Mantels ausgebildet ist.

18. Verfahren zur Herstellung einer Isolationsvorrichtung (10) nach einem der Ansprüche 1 bis 10, **dadurch gekennzeichnet, dass** es die folgenden Schritte umfasst:
- Herstellen einer Folie (11) aus einem elektrisch isolierenden Kunststoff, insbesondere durch Extrusion,
- Schneiden, in diese Folie, des Umfangs (24) mindestens einer Zunge (12A-12E; 14A-14E, 16A-16E, 18A-18D, 20A, 20D, 22A-22D), insbesondere durch mechanisches Schneiden,
- Ausbilden der Zunge (12A-12E; 14A-14E, 16A-16E, 18A-18D, 20A, 20D, 22A-22D) in einer gefalteten Konfiguration, in welcher sie im Wesentlichen senkrecht zur Hauptebene (P) der Folie (11) ist.

## Claims

1. An isolation device (10) for electrically isolating from one another a plurality of power-storage assemblies (102) arranged side by side in a power-storage module (100), the device including a sheet (11) made of a flexible electrically insulating material and lying in a main plane (P), the device also including at least one tongue (12A-12E; 14A-14E, 16A-16E, 18A-18D, 20A, 20D, 22A-22D) integral with the sheet (11) for electrically isolating two adjoining storage assemblies (102) which are not joined by an electrical connecting strip, said tongue being made of an insulating material and being intended to protrude from the main plane so as to be positioned between two adjoining storage assemblies, **characterized in that** the, or at least one of the tongues (12A-12E; 14A-14E, 16A-16E, 18A-18D, 20A, 20D, 22A-22D) is movable in rotation relative to the rest of the sheet (11) about a fold axis (R) such that it has a manufacturing configuration wherein it lies in the main plane (P) and a folded configuration wherein it is placed in a plane substantially perpendicular to the main plane.

2. The device according to claim 1, wherein the sheet (11) is cut out along a portion of a contour (24) to form the tongue, a segment connecting the two ends (26) of the contour portion coinciding with the fold axis of the tongue.

3. The device according to claim 2, wherein the sheet (11) has at least one end hole (26) at one at least, particularly at each junction of the segment coinciding with the fold axis (R) of a tongue and the corresponding cut-out contour portion (24).

4. The isolation device according to any one of the previous claims, wherein the sheet (11) includes at least two tongues (12A-12E; 14A-14E, 16A-16E, 18A-18D, 20A, 20D, 22A-22D) which are essentially mutually perpendicular when protruding from the main plane of the sheet by extending substantially perpendicularly to the main plane.

5. The device according to any one of the previous claims, including at least one row (12, 14, 16, 18, 20, 22) of tongues the respective straight intersecting lines whereof (D12, D14, D16, D18, D20, D22) with the main plane, corresponding in particular to the respective fold axes (R) of these tongues, coincide, and form the intersecting straight line of the row with the main plane.

6. The device according to claim 5, including at least a first row (12, 14, 16) of tongues and at least a second row of tongues (18, 20, 22) arranged relative to the first row in such a way that the intersecting straight line (D12, D14, D16) of the first row with the main plane is essentially perpendicular to the intersecting straight line (D18, D20, D22) of the second row with the main plane.

7. The isolation device according to any one of the previous claims, including at least two tongues (12A-12E; 14A-14E, 16A-16E, 18A-18D, 20A, 20D, 22A-22D) protruding from the same side of the sheet in their folded configuration and having essentially parallel or coincident fold axes, the tongues being configured in such a way that the directions of rotation for changing from the manufacturing configuration to the folded configuration are opposite.

8. The device according to any one of the previous claims, wherein the sheet (11) includes at least one hole (32) located remotely from all the tongues (12A-12E; 14A-14E, 16A-16E, 18A-18D, 20A, 20D, 22A-22D).

9. The device according to any one of the previous claims, wherein the sheet is made of plastic, particularly polypropylene, such as PPHF (polypropylene hollow fiber).

10. The device according to any one of the previous claims, wherein the sheet (11) and the tongues (12A-12E; 14A-14E, 16A-16E, 18A-18D, 20A, 20D, 22A-22D) have a thickness of less than 1 mm, particularly less than 500 microns, preferably comprised between 200 and 300 microns.

11. A power-storage module (100) including a plurality of power-storage assemblies (102) each comprising two end faces (108A, 108B) and at least one lateral face (104), electrically connected in series and arranged side by side so that the respective first end faces (108A) of the assemblies are located substantially in one and the same first end plane (P1), the respective second end faces (108B) of the assemblies being located in one and the same second end plane (P2) essentially parallel to the first plane, the module also including at least one isolation device (10) according to any one of claims 1 to 10, so arranged that:
- the main plane (P) of the sheet is essentially parallel to the first and second end planes (P1, P2) and the sheet (11) is superposed with the end faces (108) of at least two assemblies of the module,
- the tongue(s) (12A-12E; 14A-14E, 16A-16E, 18A-18D, 20A, 20D, 22A-22D) lie in a plane essentially perpendicular to the main plane so that each tongue is interposed between two power-storage assemblies (102) in an abutment area (116) between these two elements.

12. The module (100) according to claim 11, including at least one first isolation device (10A) placed under the lower end faces (108A) of at least two storage assemblies and at least one second isolation device (10B) placed on the upper end faces (108B) of at least two assemblies.

13. The module (100) according to claim 11 or 12, wherein the sheet (11) of at least one isolation device (10A, 10B) is dimensioned to cover all the end faces of the adjoining assemblies.

14. The module (100) according to any one of the claims 11 to 13, wherein, in a given end plane, at least one connecting strip (112) electrically connects the end faces (108A, 108B) of two adjoining assemblies (102), the isolation device(s) (10A, 10B) superposed with said end plane being configured in such a way that the tongues (12A-12E; 14A-14E, 16A-16E, 18A-18D, 20A, 20D, 22A-22D) are interposed between all the adjoining assemblies with the exception of those connected by a connecting strip.

15. The module (100) according to any one of the claims 11 to 14, wherein each storage assembly (102) includes an enclosure including a case (104) closed at one at least of its ends by a cover (106A, 106B) including a wall (108A, 108B) forming an end face and a collar (110) surrounding the lateral face(s) of the case, the tongue being dimensioned so as to cover the assembly over at least the entire height of the collar in the abutment area.

16. The module according to any one of the claims 11 to 15, wherein the dimension of each tongue (12A-12E; 14A-14E, 16A-16E, 18A-18D, 20A, 20D, 22A-22D) in the direction corresponding to that of its straight intersecting line (R) with the sheet (11) is greater than the dimension of the abutment area between two assemblies in this direction.

17. The module (100) according to any one of the claims 11 to 16, including a protective case surrounding the totality of the power-storage assemblies, this case (120) comprising an upper wall (124) and a lower wall (122) each superposed with an end plane of the assemblies, the sheet (11) of the or of each isolation device being arranged between an end plane of the assemblies and the corresponding wall (120, 122) of the enclosure.

18. A method for manufacturing an isolation device (10) according to any one of claims 1 to 10, **characterized in that** it includes the following steps:
- a sheet (11) made of electrically insulating plastic is manufactured, particularly by extrusion,
- the contour (24) of at least one tongue (12A-12E; 14A-14E, 16A-16E, 18A-18D, 20A, 20D, 22A-22D) is cut out of this sheet, particularly by mechanical cutting,
- the tongue (12A-12E; 14A-14E, 16A-16E, 18A-18D, 20A, 20D, 22A-22D) is arranged in a folded configuration, wherein the tongue is essentially perpendicular to the main plane (P) of the sheet (11).
